Europäisches Patentamt

European Patent Office

Office européen des brevets

(11) Publication number: **0 249 481**
**A1**

## EUROPEAN PATENT APPLICATION

(21) Application number: 87305180.9

(22) Date of filing: 11.06.87

(51) Int. Cl.⁴: **B 65 G 53/50**
**A 23 L 1/01**

(30) Priority: 12.06.86 US 873548

(43) Date of publication of application:
16.12.87 Bulletin 87/51

(84) Designated Contracting States:
AT BE CH DE ES FR GB GR IT LI LU NL SE

(71) Applicant: **NABISCO BRANDS, INC.**
**100 DeForest Avenue**
**East Hanover New Jersey 07936 (US)**

(72) Inventor: **Garibian, Váhan Michael**
**Two Meadowbrook Terrace**
**Sparta New Jersey 07871 (US)**

(74) Representative: **Thomas, Roger Tamlyn et al**
**D. Young & Co. 10 Staple Inn**
**London WC1V 7RD (GB)**

(54) Venturi apparatus for feeding particulate material.

(57) A Venturi aspirator having a neck portion (4) with an inlet orifice (3) is used to introduce particulate materials into pressure vessels (7). A conditioned gaseous fluid such as air or steam, preferably recirculated from the pressure vessel (7), is fed into a Venturi inlet (3). This creates a pressure difference between the fluid at the neck (4) of the Venturi and the particulate material, which is at atmospheric pressure, causing the particulate feed material to be aspirated into the pressure vessel (7). At least one of the temperature and moisture content of the gaseous fluid are controlled to prevent the particulate material from becoming adherent. The feed material is mixed and moved along the vessel (7) by a screw conveyor (9), which leads to a dropout chamber (8), when it flows out through a rotary pocket valve (21) for further processing.

EP 0 249 481 A1

**Description**

## VENTURI APPARATUS FOR FEEDING PARTICULATE MATERIAL

### BACKGROUND OF THE INVENTION

This invention relates to apparatus for feeding powders into pressurized chambers, and particularly to apparatus for feeding powders which tend to cake or become sticky and adhere to surfaces.

There are many ways of supplying particulate material to processing apparatus which use such material. For example, manually shoveling powdered material into an open mixer is the simplest. However, where a pressurized system is required, or where the powdered material becomes sticky and tends to adhere to contacting surfaces when heated or combined with liquid, most feed devices tend to become clogged.

Muller, U.S. Patent No. 2,592,170, discloses a method of feeding slurried granular materials, e.g., rice, to a cereal cooker through a Venturi tube when it is discharged from a high pressure in the tube to the relatively low pressure in the cooker. The rice initially passes from a grain bin (3) directly into the cooker, where it is steeped in water at ambient pressure. The resulting slurry is drawn from the bottom of the cooker and transferred by combination fluid reduction mill (7)/booster pump (8) to the inlet of Venturi tube (9). Steam is injected into the Venturi flash tube (9) through a steam valve (10), which raises the pressure therein and forces the slurry through a flash tube nozzle (11) into the cooker. Once the slurry or mash has been charged to the cooker, steam is admitted via valve (15) to cook the material under pressure. The pressure in the cooker is reduced before the cooked material is discharged. However, there is no teaching or suggestion of using a Venturi aspirator to inject particulate material into a pressurized vessel. Furthermore, although additional apparatus is shown, none relates to recycling the steam from a pressure chamber along with use of a Venturi aspirator to feed powdered materials into a pressure chamber, nor to discharge of cooked material from a pressurized vessel.

Henderson et al., U.S. Patent No. 4,256,771, discloses a continuous gelatinization process in which a starch-containing material is gelatinized in a continuous process using a Venturi mixer apparatus in which wet steam is fed to the throat of the Venturi, with dry particulate starch material fed upstream of the throat.

Heiland, U.S. Patent No. 3,430,643, describes venting gases or liquids containing entrained solid particles through an orifice between two different pressure potentials, including an apparatus for venting steam through the lid for a puffing gun.

In many processes it is necessary to introduce a particulate material into a pressurized vessel, for instance, the introduction of a powdered material into a pressurized steam cooker. Where the particulate material becomes sticky upon contact with moisture and/or elevated temperatures, the problem of avoiding the buildup of an adherent mass of the material around the inlet of the pressure vessel has not been effectively addressed in the prior art. Improved means of feeding such materials to pressure vessels are needed.

### SUMMARY OF THE INVENTION

It is accordingly one aim of the present invention to provide improved apparatus for feeding particulate materials into pressure vessels which is reliable and resist adherence or buildup of the material on inlet surfaces.

In one form of the invention as hereinafter described, an improved apparatus is employed for feeding particulate materials into a pressurized steam chamber, a Venturi apparatus being used together with injection of conditioned steam to prevent adherence of the material when it has been moistened.

In another form of the invention as hereinafter described, an improved apparatus comprises a Venturi aspirator for feeding particulate material into a pressurized steam chamber, and steam is drawn off from the chamber, recycled and used to power the Venturi.

In accordance with the present invention, apparatus is provided for injecting particulate material into a pressurized vessel, comprising:

(a) a Venturi nozzle having an inlet section, a neck section and an outlet section operatively connected to an inlet orifice of the pressurized vessel, the neck section of the Venturi nozzle having a feed orifice in the wall thereof;

(b) means for supplying the particulate material to the feed orifice in the neck section of the Venturi nozzle;

(c) means for supplying a conditioned gaseous fluid under pressure to the inlet section of the Venturi nozzle to entrain the particulate material in a flow stream of the pressurized fluid; and

(d) means for controlling at least one of the temperature and moisture content of the gaseous fluid so as to prevent the particulate material from becoming adherent.

Further in accordance with the invention, a process is provided for injecting particulate material into a pressurized vessel using a Venturi aspirator comprising a Venturi nozzle having an inlet section, a neck section and an outlet section operatively connected to an inlet orifice of the pressurized vessel, with a feed orifice in the neck section of the Venturi nozzle, comprising the steps of:

(a) supplying particulate material to the feed orifice in said pressure vessel);

(b) supplying a pressurized conditioned gaseous fluid to the inlet section of the Venturi nozzle such that the particulate material is drawn into the neck section through the feed orifice, so as to entrain the particulate material in a flow stream of the fluid, thus

(c) injecting the entrained particulate material into the pressurized vessel, and

(d) controlling at least one of the temperature and moisture content of the fluid so as to prevent the particulate material from becoming adherent.

In a preferred embodiment of the invention, a process for injecting a particulate farinaceous material into a pressurized vessel for steam cooking is provided, comprising the steps of:

(a) supplying the particulate material to a feed orifice in the neck of a Venturi nozzle operatively connected to the vessel;

(b) passing superheated steam through the Venturi nozzle so as to entrain the particulate material and thereby inject the material into the pressurized vessel, wherein the material is transported mechanically and cooked by exposure to saturated steam; and

(c) controlling at least the temperature and pressure of the superheated steam so as to prevent the farinaceous particulate material from becoming adherent.

Further details, objects and advantages of the present invention will be apparent from the following detailed description of a preferred embodiment shown schematically in the drawings, and the appended claims.

## DETAILED DESCRIPTION OF PREFERRED EMBODIMENTS

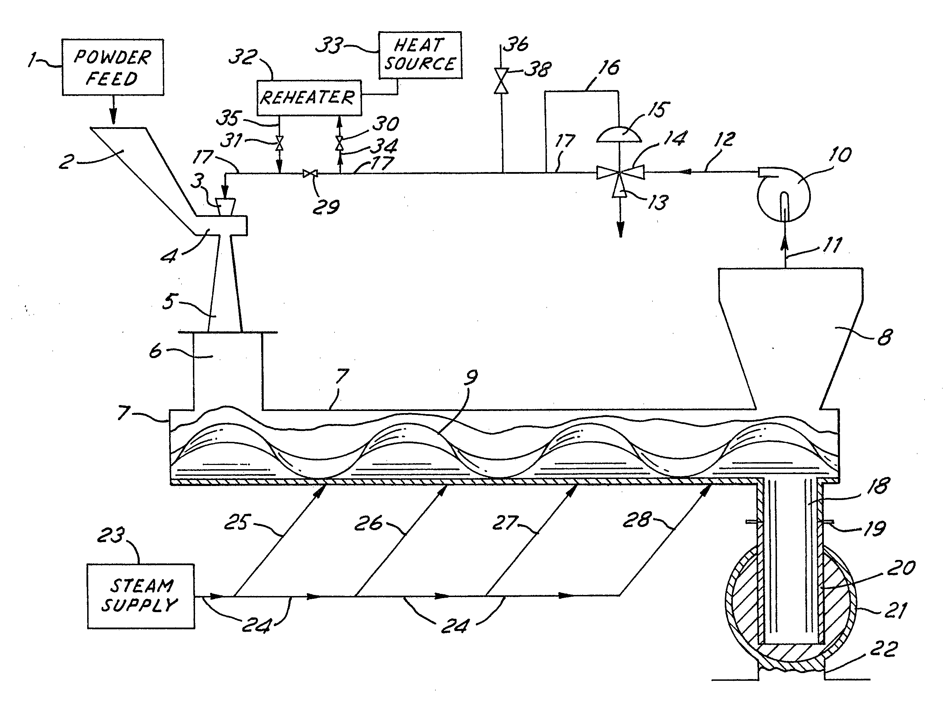

The drawing shows a side view of a preferred form of apparatus according to the invention, shown partially schematically with the pressure vessel portion being shown in a side elevational view which is partially broken away.

The apparatus and process of the present invention are broadly applicable to any suitable process in which particulate material is to be injected into a pressurized vessel such as a cooker, mixer or the like, but has a tendency to become adherent (i.e., co-adherent or adherent to surfaces contacted) before entering the vessel, due to the effects of moisture or temperature. The particulate material can have any shape suitable for processing, with the size ranging from finely divided powders to the largest particles which can be aspirated and entrained in a gas flow stream by a Venturi aspirator. As non-limiting examples, the particulate materials can include thermoplastic materials such as natural or synthetic polymers, waxes, oleaginous encapsulants, and the like; hygroscopic or deliquescent materials such as certain mineral salts (e.g., alkali metal halides such as sodium chloride), sugars and the like; confectionary compounds such as crushed hard candy, chocolate chips and the like, and farinaceous materials. Farinaceous materials comprise whole, cracked or processed grain meals, flours and the like. The apparatus and process of the present invention are particularly suitable for the handling of farinaceous materials in which the starch hydrates or gelatinizes upon exposure to excessive moisture, causing the materials to become sticky or adherent. The products produced by mixing such farinaceous materials under pressure, optionally with heating or cooking, include various types of doughs, cooked cereal, fermentation mashes, and the like.

The drawing schematically illustrates the operation and use of the Venturi aspirator apparatus of the present invention in injecting a farinaceous powder into a steam cooker. A powder feed supply (1) supplies powder to a hopper (2), preferably at a controlled rate. The hopper (2) is elevated above the neck section (4) of a Venturi nozzle, and the powder enters through a feed orifice in the wall thereof.

The Venturi has an inlet (3) and an outlet section (5). The outlet section (5) is flared along its length, as is conventional, to ensure smooth expansion of the flowing fluid. The flowing fluid can be a conditioned fluid such as steam or air which has entrained powder particles therein. The construction and operation of such Venturi aspirators are described more fully in U.S. Patent No. 4,010,551.

Alternatively, if required by the materials to be processed, the fluid can be an inert gas.

The pressurized fluid supply enters the Venturi at (3) along a conduit (17). The Venturi discharges from the outlet section (5) into a receiving portion or inlet orifice (6) of the vessel (7). The vessel (7) is a pressure chamber, and has a screw conveyor member (9) therein. The screw conveyor member conveys the powder together with steam and water (which has been condensed from steam due to cooling of the steam) toward an opposite end of the vessel (7). Processed material (e.g., cooked and mixed powder) is discharged along a conduit (18) to a valve such as a rotary pocket valve (21), or a similar valve which permits controlled flow through the conduit (18) without releasing pressure from the vessel (7). Examples of suitable control valves, described as air lock valves, can be found in U.S. Patent No. 4,330,946. Such control valves are preferably used to permit periodic removal of at least a portion of the processed material without substantial loss of pressure from the vessel, to avoid wasting the fluid and the energy required to pressurize and heat or chill it.

A steam supply (23) provides steam through conduit (24) to heat the contents of vessel (7). To this end, individual feeder lines branch off from conduit (24) to distribute the steam along the length of vessel (7). The branch conduit lines include line (25), line (26), line (27), and line (28). The steam is injected via inlet ports (not shown) on each branch conduit line. This permits a more even heating of the materials being processed in the vessel (7). Water is produced as the steam condenses, allowing the farinaceous material to hydrate or gelatinize. Alternatively, other suitable heating means can be provided for the vessel.

At the same end of the vessel (7), on the side opposite the conduit (18), is a dropout chamber (8). Steam is extracted from the dropout chamber (8) along conduit (11), which steam is pumped by a pump or blower (10), or the equivalent. The excess steam is vented form the pressurized chamber to make room for the entering steam which powers the Venturi and cooks the material, and could be merely vented to the atmosphere or condensed at this point. However, to provide an efficient and economical system, it is preferable to recycle this steam for use in the Venturi, as described below. The steam, at an increased pressure, flows along conduit (12), the steam flow rate being controlled by a control valve (14). The valve (14) has an automatic operator (15). This could be used, for example, in conjunction with a control signal line (16) to control the flow rates through the valve (14) automatically. A vent (13) is included in the valve (14) for venting excess steam, to provide for safety as well as for convenience in purging the conduit (12) for routine maintenance operations. A conduit (36) and valve (38) are provided for the addition of makeup fluid to replace any losses through conduit (18) which are not replenished by steam supply (23). Such means for supplying makeup fluid can be placed at any suitable location, but preferably upstream of any means for heating, chilling or otherwise conditioning the fluid before it flows into the Venturi. At least one source of makeup fluid should be included to permit continuous operation of the apparatus.

A valve (29) is provided, further downstream of the valve (14), which may be operated manually or automatically as desired. This valve, when closed, would force circulation of the steam into a conduit (34) having a valve (30) therein.

Conduit (34) supplies the steam from conduit (17) to a superheater or reheater (32). Such a reheater can be of any conventional heat exchanger type, for instance a tube heat exchanger wherein a hot gas such as air or combustion gases circulates about tubes containing flowing steam, so as to heat the steam within the tubes. The hot gas is provided from heat source (33). Alternatively, the steam could flow about the tubes, which tubes contain the heated air. This provides for a complete separation of the heating fluid from the steam which is to be heated. The heat is supplied from a heat source (33) which may be an electrical heat source, a gas furnace to supply combustion gases or hot air, a source of superheated steam, or the like.

In another embodiment, if a chilled fluid is to be provided to the Venturi aspirator, the reheater and associated components can be replaced by refrigerating or cooling units and suitable heat exchange means for chilling the recycled fluid (generally air or an inert gas) to the required sub-ambient temperature. To prevent particulate materials such as chocolate chips from melting, it may be necessary to chill the fluid to substantially (e.g., at least about 20°F degrees) below ambient temperature.

Upon being heated in the reheater, the steam flows out through conduit (35) and back to conduit (17). In this situation, the valve (29) is in a closed position. This prevents backflow of the steam. The reheater may be optionally provided to increase the temperature of the steam in the conduit (17) above that which might permit condensation of some of the steam. In other words, the reheater is used to ensure that the steam in conduit (17) is not saturated steam but rather is superheated steam. The object of the use of such steam is to avoid the presence of liquid droplets which would tend to cause agglomeration, lumping, adherence, deliquescence or sticking of the powder material fed into the hopper (2) which is received in an orifice at the neck (4) of the Venturi.

The use of a reheater (32) may also be desirable in order to boost the overall pressure in the line (17). The blower or pump (10) increases the pressure from conduit (11) to conduit (12). A lesser change in pressure would be required where the steam pressure has been boosted due to the reheater (32), because gas pressure increases when the gas is heated. Alternatively, the reheating step at the reheater (32) can be useful in increasing the velocity of the steam flowing through conduit (17), since a heated gas, if not under an increased pressure, tends to expand.

At the outlet portion (18) of the vessel (7), a joint (19) is shown. The exit (18) has a lower portion (20) which discharges the material from the vessel (7) into the rotary pocket valve (21).

In operation, other materials could be fed into the vessel (7) at its left-most or upstream end, where such materials would be combined with the particulate material fed from the powder feed supply (1). Since all of the particles are entrained in the fluid flow at the Venturi (3), (4), (5) there is not a problem with the particles adhering or agglomerating together into clumps which do not readily dissolve. Thus, in the present invention, apparatus and methods are provided for feeding particulate materials into a pressurized vessel wherein the particles can be readily used in further processing, with the processing steam, air or other fluid coming mainly from recycled steam or air.

## Claims

1. Apparatus for injecting particulate material into a pressurized vessel comprising:

 (a) a Venturi nozzle having an inlet section, a neck section and an outlet section operatively connected to an inlet orifice of said pressurized vessel, said neck section of said Venturi nozzle having a feed orifice in the wall thereof;

 (b) means for supplying said particulate material to said feed orifice;

 (c) means for supplying a gaseous fluid under pressure to said inlet section of said Venturi nozzle to entrain said particulate material in a flow stream of the pressurized fluid; and

 (d) means for controlling at least one of the temperature and moisture content of said gaseous fluid so as to prevent said particulate material from becoming adherent.

2. Apparatus in accordance with Claim 1, comprising means for providing superheated steam as said gaseous fluid.

3. Apparatus in accordance with Claim 1, comprising means for providing a dry, chilled gas as said gaseous fluid.

4. Apparatus in accordance with Claim 1, wherein said pressurized vessel includes a dropout chamber, and said apparatus comprises means for extracting pressurized fluid from said pressurized vessel for recycling, means for boosting the pressure of the recycled fluid, and conduit means for supplying said recycled fluid to said means for supplying fluid to said inlet section of said Venturi nozzle.

5. Apparatus in accordance with Claim 4, further comprising means for heating the recycled fluid.

6. Apparatus in accordance with Claim 4, further comprising means for chilling and drying the recycled fluid.

7. Apparatus in accordance with any preceding claim, wherein said vessel includes a rotary pocket valve to control the removal of the contents of said vessel.

8. Apparatus in accordance with any preceding claim, further comprising means for heating said pressurized vessel.

9. Apparatus in accordance with any preceding claim, further comprising means for supplying makeup fluid to said means (c) for supplying gaseous fluid.

10. Apparatus in accordance with any preceding claim, wherein said means (b) for supplying said particulate material to said feed orifice comprise means for controlling the rate of supply of said material.

11. Apparatus in accordance with any preceding claim, further comprising means for injecting a heated fluid into said pressurized vessel in a plurality of locations.

12. Apparatus in accordance with any preceding claim, further comprising means for mixing and/or transporting particulate material within said vessel.

13. A process for injecting particulate material into a pressurized vessel using a Venturi aspirator comprising a Venturi nozzle having an inlet section, a neck section and an outlet section operatively connected to an inlet orifice of said pressurized vessel, with a feed orifice in said neck section of said Venturi nozzle, comprising

(a) supplying particulate material to said feed orifice;

(b) supplying a pressurized gaseous fluid to said inlet section of said Venturi nozzle such that said particulate material is drawn into said neck section through said feed orifice, so as to entrain said particulate material in a flow stream of said fluid,

(c) injecting the entrained particulate material into said pressurized vessel; and

(d) controlling at least one of the temperature and moisture content of said fluid so as to prevent said particulate material from becoming adherent.

14. A process in accordance with Claim 13, wherein said fluid is steam and is supplied to said inlet section of said Venturi nozzle as superheated steam.

15. A process in accordance with Claim 13, wherein said fluid is dry air.

16. A process in accordance with Claim 15, wherein said dry air is heated to substantially above ambient temperature.

17 . A process in accordance with Claim 15, wherein said dry air is chilled to substantially below ambient temperature.

18 . A process in accordance with any one of Claims 13-17, wherein said particulate material comprises farinaceous materials.

19 . A process in accordance with Claim 18, wherein said particulate material comprises at least one farinaceous flour.

20 . A process in accordance with any one of Claims 13-19, wherein said particulate material comprises at least one sugar.

21 . A process in accordance with any one of Claims 13-20, wherein said particulate material comprises at least one confectionary composition.

22 . A process in accordance with any one of Claims 13-21, wherein said particulate material comprises at least one deliquescent mineral.

23 . A process in accordance with any one of Claims 13-17, wherein said particulate material comprises at least one thermoplastic polymer.

24 . A process for injecting a particulate farinaceous material into a pressurized vessel for steam cooking, comprising the steps of:

(a) supplying said particulate material to a feed orifice in the neck of a Venturi nozzle operatively connected to said vessel;

(b) passing superheated steam through said Venturi nozzle so as to entrain said particulate material and thereby inject said material into said pressurized vessel, wherein said material is transported mechanically and cooked by exposure to saturated steam; and

(c) controlling at least the temperature and pressure of said superheated steam so as to prevent said farinaceous particulate material from becoming adherent.

25 . A process in accordance with Claim 24, wherein saturated steam is injected into said pressurized vessel through at least one inlet port to cook said farinaceous material.

26 . A process in accordance with Claim 24 or 25, wherein said material is transported within said vessel by a conveyor screw.

27. A process in accordance with Claim 24, 25 or 26, wherein steam is recovered from said vessel, recycled and superheated for supply to said Venturi nozzle.

28. A process in accordance with any one of Claims 24-27, wherein the cooked material is removed from said vessel through at least one pocket valve.

## DOCUMENTS CONSIDERED TO BE RELEVANT

EP 87305180.9

| Category | Citation of document with indication, where appropriate, of relevant passages | Relevant to claim | CLASSIFICATION OF THE APPLICATION (Int. Cl.4) |
|---|---|---|---|
| A | US - E - 26 474 (ALTMAN)<br>* Column 2, line 5 - column 6, line 8 * | 1,8,12, 13,15, 18,24- 26 | B 65 G 53/50<br>A 23 L 1/01 |
| A | US - A - 4 214 013 (HIRAHARA)<br>* Column 4, line 57 - column 7, line 56 * | 1,2,7, 8,11- 13,24, 26,28 | |
| A | US - A - 4 181 072 (HIRAHARA)<br>* Column 4, line 56 - column 7, line 57 * | 1,2,7, 8,11- 13,24, 26,28 | |
| D,A | US - A - 4 256 771 (HENDERSON)<br>* Fig. 1; column 4, lines 52-54 * | 1,13, 24 | |

----

| TECHNICAL FIELDS SEARCHED (Int. Cl.4) |
|---|
| A 23 L 1/00 |
| A 23 L 3/00 |
| B 65 G 49/00 |
| B 65 G 53/00 |

The present search report has been drawn up for all claims

| Place of search | Date of completion of the search | Examiner |
|---|---|---|
| VIENNA | 14-09-1987 | PISSENBERGER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82